# EUROPÄISCHE PATENTANMELDUNG

(11) **EP 3 647 889 A1**
(43) Veröffentlichungstag der Anmeldung: **06.05.2020**
(21) Anmeldenummer: 18203710.1
(22) Anmeldetag: 31.10.2018
(51) Int. Cl.: G05B 19/042

(54) **FEHLERSICHERE SEQUENZKONTROLLE VON PROZESSEN**

(71) Anmelder: Siemens Aktiengesellschaft, 80333 München (DE)
(72) Erfinder: Popov, Chavdar, 76297 Stutensee-Blankenloch (DE); Precht, Benjamin, 76474 Au am Rhein (DE)

(57) **Zusammenfassung**

Vorgeschlagen wird ein Automatisierungssystem (1) zur Automatisierung einer Sequenz, wobei die Sequenz eine Mehrzahl an Phasen umfasst, innerhalb derer eine bestimmte Funktion zur Steuerung einer technischen Anlage (7) ausführbar ist. Das Automatisierungssystem (1) ist erfindungsgemäß dadurch gekennzeichnet, dass es wenigstens einen fehlersicheren Transitionsbaustein (2, 2a, 2b, 2c), einen fehlersicheren Überwachungsbaustein (3, 3a, 3b, 3c), einen fehlersicheren Sequenzkontrollbaustein (4) und einen fehlersicheren Phasenfunktionsbaustein (5, 5a, 5b, 5c, 6, 6a, 6b, 6c) aufweist.

## Beschreibung

Die Erfindung betrifft ein Automatisierungssystem zur Automatisierung einer technischen Anlage nach Anspruch 1. Außerdem betrifft die Erfindung ein Verfahren zur fehlersicheren Durchführung einer Automatisierung einer technischen Anlage mittels eines Automatisierungssystems nach Anspruch 6. Zudem betrifft die Erfindung ein Computerprogramm mit durch einen Computer ausführbaren Programmcodeanweisungen nach Anspruch 7, ein Speichermedium mit einem durch einen Computer ausführbaren Programmcodeanweisungen nach Anspruch 8 und ein Computersystem nach Anspruch 9.

Bei vielen industriellen Anwendungsfällen der Prozess- oder Fertigungsautomatisierung muss eine sicherheitsbezogene Sequenzkontrolle implementiert werden. Beispiele hierfür sind Steuerungssysteme für Brennanlagen oder Losfertigungen in der Pharma- oder Medizinindustrie.

Eine bislang bekannte Lösung zur Realisierung von Prozesssequenzen einer Automatisierung einer technischen Anlage, insbesondere Prozess- oder Fertigungsanlage, stellt beispielsweise die Verwendung von sogenannten Sequential Function Charts dar. Diese Lösung ist allerdings nicht fehlersicher.

Andere Methoden wie Ursache-Wirkungs-Matrizen sind zwar fehlersicher, lassen sich aber nicht oder nur schwer für Prozesssequenzen verwenden.

In der DE 199 28 517 C2 ist ein Steuerungssystem zum Steuern sicherheitskritischer Prozesse offenbart.

Die DE 102 19 501 B4 offenbart ein System zur Verbesserung von Fehlerbeherrschungsmaßnahmen bei Automatisierungssystemen.

Der Erfindung liegt die Aufgabe zugrunde, einen fehlersicheren Ablauf einer Automatisierung einer industriellen Anlage zu realisieren.

Diese Aufgabe wird gelöst durch ein Automatisierungssystem zur Automatisierung einer technischen Anlage, wobei die Automatisierung eine Mehrzahl an Phasen umfasst, innerhalb derer eine bestimmte Funktion zur Steuerung der technischen Anlage ausführbar ist, nach Anspruch 1. Zudem wird die Aufgabe gelöst durch ein Verfahren zur fehlersicheren Durchführung einer Automatisierung einer technischen Anlage mittels eines Automatisierungssystems nach Anspruch 6. Zudem wird die Aufgabe gelöst ein Computerprogramm mit durch einen Computer ausführbaren Programmcodeanweisungen nach Anspruch 7, ein Speichermedium mit einem durch einen Computer ausführbaren Programmcodeanweisungen nach Anspruch 8 und ein Computersystem nach Anspruch 9. Vorteilhafte Weiterbildungen ergeben sich aus den abhängigen Ansprüchen.

Bei der technischen Anlage kann es sich um eine Anlage aus der Prozessindustrie wie beispielsweise eine chemische, pharmazeutische, petrochemische oder eine Anlage aus der Nahrungs- und Genussmittelindustrie handeln. Hiermit umfasst sind auch jegliche Anlagen aus der Produktionsindustrie, Werke, in denen z.B. Autos oder Güter aller Art produziert werden. Technische Anlagen, die zur Durchführung des erfindungsgemäßen Verfahrens geeignet sind, können auch aus dem Bereich der Energieerzeugung kommen. Windräder, Solaranlagen oder Kraftwerke zur Energieerzeugung sind ebenso von dem Begriff der technischen Anlage umfasst.

Diese Anlagen verfügen jeweils über ein Leitsystem oder zumindest ein computerunterstütztes Modul zur Steuerung und Regelung des ablaufenden Prozesses oder der Produktion. Teil des Leitsystems oder Steuerungsmoduls oder einer technischen Anlage ist zumindest eine Software-Datenbank, in der Daten hinterlegbar sind.

Unter dem Begriff "Sequenz" wird eine Abfolge von mehreren elementaren Steuerungsoperationen, sogenannten "Phasen", einer Automatisierung in der Prozess- oder Fertigungsindustrie verstanden. Eine Phase stellt dabei die kleinstmögliche Einheit einer Prozess- oder Fertigungsautomatisierung dar.

Unter einer Automatisierung wird die selbständige (automatisierte) Erfassung und Beeinflussung physikalischer Größen mithilfe technischer Mittel verstanden. Dabei werden in der Regel Maschinen, Anlagen oder sonstige Einrichtungen in die Lage versetzt, selbsttätig zu arbeiten.

Das Automatisierungssystem ist erfindungsgemäß dadurch gekennzeichnet, dass es wenigstens einen fehlersicheren Transitionsbaustein, einen fehlersicheren Überwachungsbaustein, einen fehlersicheren Sequenzkontrollbaustein und einen fehlersicheren Phasenfunktionsbaustein aufweist.

Dabei ist der fehlersichere Transitionsbaustein dazu ausgebildet und vorgesehen, für eine erste Phase der Automatisierung dahingehend eine Überprüfung vorzunehmen, ob Übergangsbedingungen für einen Übergang von der ersten Phase in eine zweite Phase erfüllt sind. Zudem ist der fehlersichere Transitionsbaustein dazu ausgebildet und vorgesehen, eine zu der Überprüfung der Übergangsbedingung korrespondierende Information an den Sequenzkontrollbaustein zu übermitteln.

Bei dem zuvor erläuterten Transitionsbaustein sowie dem Überwachungsbaustein, dem Sequenzkontrollbaustein und dem Phasenfunktionsbaustein ist unter einem "fehlersicheren" Baustein ein Baustein zu verstehen, der integrierte Mechanismen zur Fehlererkennung bzw. Fehlerreaktion aufweist, die zur Umsetzung eines fehlersicheren Automatisierungssystems dienen. Die fehlersicheren Bausteine sind derart ausgebildet, dass beim Auftreten bestimmter Ausnahmesituationen das Automatisierungssystem in einem sicheren Zustand bleibt oder unmittelbar in einen solchen übergeht. Dabei ist eine Grundvoraussetzung, dass ein solcher sicherer Zustand überhaupt existiert.

Der Übergang von einer (ersten) Phase in eine (zweite) Phase der Sequenz ist bei sicherheitsbezogenen (Automatisierungs-)Systemen als sicherheitskritisch zu bewerten. Daher überprüft der Transitionsbaustein, ob bestimmte Bedingungen erfüllt sind, die für einen sicheren Übergang zu der darauffolgenden Phase notwendigerweise erfüllt sein müssen. Bei den Übergangsbedingungen kann es sich beispielsweise um bestimmte Parameterwerte der zu automatisierenden technischen Anlage handeln, die der Transitionsbaustein in analoger oder digitaler Form aus dem Automatisierungssystem auslesen und auswerten kann. Die Übergangsbedingungen können dabei sowohl direkt in dem Transitionsbaustein hinterlegt sein als auch von diesem aus einer sonstigen Quelle, beispielsweise einem zentralen Datenarchiv des Automatisierungssystems, entnommen werden. Nach der Abfrage, ob die Übergangsbedingungen für den Übergang in die nachfolgende Phase der Sequenz erfüllt sind, kann der Transitionsbaustein diese (korrespondierende) Information an den Sequenzkontrollbaustein zur weiteren Verarbeitung weitergeben.

Der fehlersichere Überwachungsbaustein ist dazu ausgebildet und vorgesehen, das Vorliegen eines sicheren Zustands des Automatisierungssystems während einer Phase zu überprüfen und eine korrespondierende Information an den Sequenzkontrollbaustein zu übermitteln. Der fehlersichere Überwachungsbaustein überprüft, ob bei der Automatisierung bestimmte Grenzwerte überschritten werden. Hierzu kann der Überwachungsbaustein mit speziellen Sensoren verbunden sein, die ihm entsprechende Parameter des Automatisierungssystems übermitteln. Mittels in dem Überwachungsbaustein hinterlegter oder von einer externen Quelle abgerufener Grenzwerte kann der Überwachungsbaustein prüfen, ob sich das Automatisierungssystem in einem unsicheren Zustand befindet.

Das Ergebnis der Überprüfung übermittelt der Überwachungsbaustein anschließend an den Sequenzkontrollbaustein. Im Fall, dass keine Grenzwerte überschritten werden, meldet der Überwachungsbaustein dem Sequenzkontrollbaustein, dass ein normaler Betrieb des Automatisierungssystems vorliegt. Im Ausnahmefall (d.h. es liegt kein sicherer Betrieb des Automatisierungssystems vor) ist der Überwachungsbaustein dazu ausgebildet, eine Anforderung an den Sequenzkontrollbaustein weiterzugeben, dahingehend, dass der Sequenzkontrollbaustein einen unmittelbaren Übergang des Automatisierungssystems in einen sicheren Zustand bewirkt.

Der fehlersichere Sequenzkontrollbaustein ist dazu ausgebildet und vorgesehen, eine aktuell aktive Phase der Automatisierung anhand der von dem Transitionsbaustein und dem Überwachungsbaustein übermittelten Informationen zu ermitteln und eine Information bezüglich der aktuell aktiven Phase an den Phasenfunktionsbaustein weiterzugeben.

Der fehlersichere Phasenfunktionsbaustein ist dazu ausgebildet und vorgesehen, einen zu der aktuell aktiven Phase gehörigen Funktionswert auszugeben, wobei der Funktionswert zur Steuerung der Automatisierung verwendbar ist. Dabei kann das Automatisierungssystem wenigstens einen ersten Phasenfunktionsbaustein zur Ausgabe von digitalen Funktionswerten und einen zweiten Phasenfunktionsbaustein zur Ausgabe von analogen Funktionswerten aufweisen. Dadurch lassen sich verschiedenartige nachfolgende Aktoren oder sonstige Einrichtungen der Automatisierung ansprechen.

Bei einer bevorzugten Weiterbildung der Erfindung ist der Sequenzkontrollbaustein dazu ausgebildet und vorgesehen, für den Fall, dass er von dem Überwachungsbaustein die Information erhält, dass kein sicherer Zustand der Automatisierung vorliegt, einen sicheren Zustand der Automatisierung zu bewirken. Hierzu kann der Sequenzkontrollbaustein diese Information zunächst dem Phasenfunktionsbaustein weitergeben, der dann entsprechende Funktionswerte an die Automatisierung ausgibt, die diese in einen sicheren Zustand versetzt. Es kann aber auch vorgesehen sein, dass der Sequenzkontrollbaustein diese Funktion selbst erfüllen kann (ohne die Zwischenschaltung des Phasenfunktionsbausteins).

Im Rahmen einer vorteilhaften Weiterbildung der Erfindung weist der Transitionsbaustein und/oder der Überwachungsbaustein eine Mehrzahl an Instanzen auf, die jeweils einer bestimmten Phase zugeordnet sind. Dies bedeutet, dass der Transitionsbaustein und/oder der Überwachungsbaustein Teilbausteine umfasst, die jeweils für eine bestimmte Phase der Sequenz ausgebildet und vorgesehen sind. Dabei verfügt jede Instanz über die notwendigen Informationen, die zur Erfüllung der zuvor erläuterten Aufgaben der Bausteine (Transitionsüberwachung, Zustandsüberwachung) vonnöten sind. Gegenüber einem einzigen umfassenden Baustein bringt diese Segmentierung den Vorteil mit sich, dass die vorzuhaltende Informationsmenge kleiner ist und die einzelnen Segmente daher schneller und effizienter arbeiten können.

Analog zu dem Transitionsbaustein und/oder dem Überwachungsbaustein weist der Phasenfunktionsbaustein bevorzugt eine Mehrzahl an Instanzen auf, die jeweils einer bestimmten Phase zugeordnet und zur Ausgabe eines bestimmten Funktionswerts ausgebildet sind.

Wenn vorliegend von einem Funktionsbaustein (Überwachungsbaustein, Transitionsbaustein, Sequenzkontrollbaustein, Phasenfunktionsbaustein) mit den dazugehörigen funktionellen Ausprägungen die Rede ist, kann tatsächlich eine Trennung in einzelne Bausteine vorliegen. Von der Erfindung umfasst ist jedoch explizit auch eine Verknüpfung mehrere (oder aller) beschriebener Funktionsbausteine zu wie auch immer gearteten übergeordneten Bausteinen. Beispielsweise wäre auch ein Baustein denkbar, der sowohl die funktionellen Merkmale des Sequenzkontrollbausteins wie auch des Phasenfunktionsbausteins (ggf. mitsamt den dazugehörigen Instanzen) umfasst.

Die Aufgabe wird zudem gelöst durch ein Verfahren zur fehlersicheren Durchführung einer Sequenz einer Automatisierung eines Automatisierungssystems, wobei die Sequenz eine Mehrzahl an Phasen umfasst, innerhalb der eine bestimmte Funktion zur Steuerung einer technischen Anlage ausführbar ist. Dabei umfasst das Automatisierungssystem wenigstens einen fehlersicheren Transitionsbaustein, einen fehlersicheren Überwachungsbaustein, einen fehlersicheren Sequenzkontrollbaustein und einen fehlersicheren Phasenfunktionsbaustein. Das Verfahren umfasst die folgenden Schritte, die zuvor bereits im Kern erläutert worden sind:
a) Überprüfung mittels des fehlersicheren Transitionsbausteins, ob für eine erste Phase der Automatisierung Übergangsbedingungen für einen Übergang von der ersten Phase in eine zweite Phase erfüllt sind, und Übermittlung von korrespondierenden Informationen an den Sequenzkontrollbaustein.
b) Überprüfung mittels des Überwachungsbausteins, ob ein sicherer Zustand der Automatisierung während der ersten Phase der Automatisierung vorliegt, und Übermittlung einer korrespondierenden Information an den Sequenzkontrollbaustein;
c) Ermittlung einer aktuell aktiven Phase der Automatisierung durch den Sequenzkontrollbaustein anhand der von dem Transitionsbaustein und dem Überwachungsbaustein übermittelten Informationen und Weitergabe einer Information bezüglich der aktuell aktiven Phase an den Phasenfunktionsbaustein;
d) Ausgabe eines zu der aktuell aktiven Phase gehörigen Funktionswerts durch den Phasenfunktionsbaustein, wobei der Funktionswert zur Steuerung der Automatisierung verwendbar ist und/oder verwendet wird.

Das Verfahren kann bevorzugt mittels eines Automatisierungssystems durchgeführt werden, welches wie zuvor erläutert ausgebildet ist.

Außerdem wird die Aufgabe gelöst durch ein Computerprogramm mit durch einen Computer ausführbaren Programmcodeanweisungen zur Implementierung des zuvor erläuterten Verfahrens. Zudem wird die Aufgabe gelöst durch ein Speichermedium mit einem durch einen Computer ausführbaren Computerprogramm, das wie zuvor erläutert ausgebildet ist, und durch ein Computersystem, auf dem ein zuvor erläutertes Computerprogramm implementiert ist.

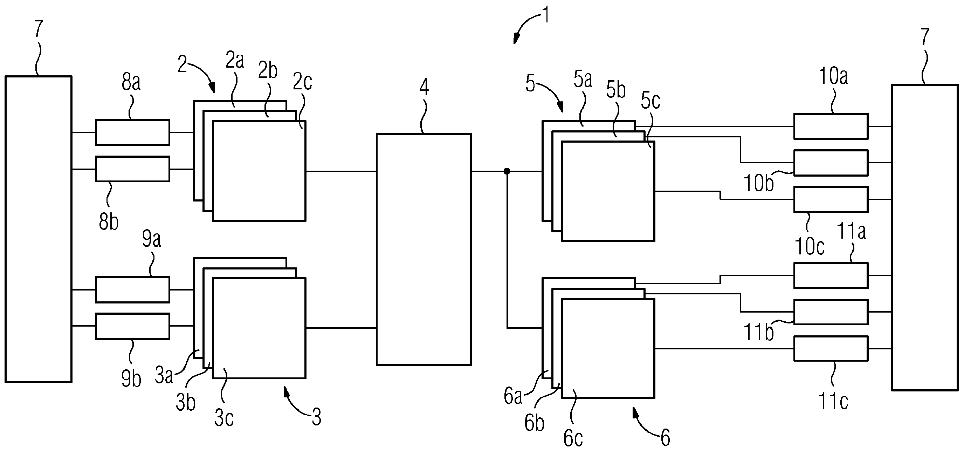

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung des Ausführungsbeispiels, das im Zusammenhang mit der Zeichnung näher erläutert wird.

In der Zeichnung ist schematisch ein Teil eines Automatisierungssystems 1 einer Prozessanlage 7 dargestellt. Das Automatisierungssystem 1 umfasst einen fehlersicheren Transitionsbaustein 2, einen fehlersicheren Überwachungsbaustein 3, einen fehlersicheren Sequenzkontrollbaustein 4 und zwei fehlersichere Phasenfunktionsbausteine 5, 6. Der Transitionsbaustein 2 weist drei Instanzen 2a, 2b, 2c auf, die jeweils einer Phase einer Sequenz zugeordnet sind. Analog dazu weisen der Überwachungsbaustein drei Instanzen 3a, 3b, 3c sowie die beiden Phasenfunktionsbausteine 5, 6 jeweils drei Instanzen 5a, 5b, 5c, 6a, 6b, 6c auf.

Der Transitionsbaustein 2 ist mittels zweier Signalleitungen 8a, 8b mit der Prozessanlage 7 verbunden und kann über diese Leitungen 8a, 8b Prozesswerte von Sensoren, I/O-System oder dergleichen empfangen. Eine Signalleitung 8a ist zum Empfangen analoger, die andere Signalleitung 8b zum Empfangen digitaler Signale ausgebildet.

Der Überwachungsbaustein 2 ist mittels zweier Signalleitungen 9a, 9b mit der Prozessanlage 7 verbunden und kann über diese Leitungen 9a, 9b Prozesswerte von Sensoren, I/O-System oder dergleichen empfangen. Eine Signalleitung 9a ist zum Empfangen analoger, die andere Signalleitung 9b zum Empfangen digitaler Signale ausgebildet.

Einer der beiden Phasenfunktionsbausteine 5 (im weiteren Verlauf als "digitaler Phasenfunktionsbaustein" bezeichnet) weist drei Instanzen 5a, 5b, 5c auf, die jeweils mittels eines zur Übertragung digitaler Signale ausgebildeten Signalleitung 10a, 10b, 10c mit der Prozessanlage 7 verbunden sind. Der digitale Phasenfunktionsbaustein 5 bzw. dessen Instanzen 5a, 5b, 5c sind entsprechend zur Ausgabe digitaler Signale bzw. Funktionswerte ausgebildet.

Der andere der beiden Phasenfunktionsbausteine 6 (im weiteren Verlauf als "analoger Phasenfunktionsbaustein" bezeichnet) weist drei Instanzen 6a, 6b, 6c auf, die jeweils mittels eines zur Übertragung analoger Signale ausgebildeten Signalleitung 11a, 11b, 11c mit der Prozessanlage 7 verbunden sind. Der analoge Phasenfunktionsbaustein 6 bzw. dessen Instanzen 6a, 6b, 6c sind entsprechend zur Ausgabe analoger Signale bzw. Funktionswerte ausgebildet.

Einer der beiden Phasenfunktionsbausteine 5 weist drei Instanzen 5a, 5b, 5c auf, die jeweils mittels eines zur Übertragung digitaler Signale ausgebildeten Signalleitung 10a, 10b, 10c mit der Prozessanlage 7 verbunden sind. Der Phasenfunktionsbaustein 5 bzw. dessen Instanzen 5a, 5b, 5c sind entsprechend zur Ausgabe digitaler Signale bzw. Funktionswerte ausgebildet.

Im Folgenden wird ein erfindungsgemäßes Verfahren zur fehlersicheren Durchführung einer Sequenz einer Automatisierung des Automatisierungssystems 1 beschrieben. Dabei umfasst die Sequenz eine Mehrzahl an Phasen, innerhalb derer eine bestimmte Funktion zur Steuerung der Prozessanlage 7 ausführbar ist.

Mittels des fehlersicheren Transitionsbausteins 2 bzw. der für die aktuell von dem Automatisierungssystem 1 abgearbeitete Phase zuständigen Instanz 2a, 2b, 2c wird überprüft, ob für die aktuell aktive (erste) Phase der Automatisierung bestimmte, in den Instanzen 2a, 2b, 2c hinterlegte Übergangsbedingungen für einen Übergang von der ersten Phase in eine zweite Phase erfüllt sind. Die Information hierüber wird an den Sequenzkontrollbaustein 4 übermittelt ("Übergangsbedingungen erfüllt" oder "Bedingungen nicht erfüllt").

Der Überwachungsbaustein 3 bzw. die jeweils für eine aktuell abgearbeitete Phase zuständige Instanz 3a, 3b, 3c überprüft, ob ein sicherer Zustand des Automatisierungssystems 1 während der ersten Phase der Automatisierung vorliegt. Für den Fall, dass die Automatisierung ordnungsgemäß abläuft, meldet der Überwachungsbaustein 3 dies dem Sequenzkontrollbaustein 4. Für den Fall, dass ein Ausnahmefall eintritt und sich das Automatisierungssystem 1 in einem unsicheren (kritischen) Zustand befindet, übermittelt der Überwachungsbaustein 3 dem Sequenzkontrollbaustein 4 eine entsprechende Anforderung, das Automatisierungssystem 1 in einen sicheren Zustand zu überführen. Hierzu ist der Überwachungsbaustein 3 mit speziellen Sensoren verbunden, die ihm entsprechende Parameter des Automatisierungssystems 1 übermitteln. Mittels in dem Überwachungsbaustein 3 hinterlegter Grenzwerte prüft der Überwachungsbaustein 3, ob sich das Automatisierungssystem in einem unsicheren Zustand befindet und kann, wie beschrieben, entsprechend reagieren.

Der Sequenzkontrollbaustein 4 ermittelt eine aktuell aktive Phase der Automatisierung anhand der von dem Transitionsbaustein 2 und dem Überwachungsbaustein 3 übermittelten Informationen. Von dem Transitionsbaustein 2 erhält er dabei beispielsweise die Information, dass die erste Phase noch aktiv ist und auch aktiv bleiben soll, da die Übergangsbedingungen (noch) nicht erfüllt sind. Alternativ kann er die Bestätigung übermittelt bekommen, dass die Übergangsbedingungen erfüllt sind und die nächste (zweite) Phase aktiviert werden kann. Entsprechend gibt er die diesbezügliche Information an den digitalen Phasenfunktionsbaustein 5 und den analogen Phasenfunktionsbaustein 6 weiter, damit diese wissen, welche Funktionswerte sie über die Signalleitungen 10a, 10b, 10c, 11a, 11b, 11c an die Prozessanlage 7 ausgeben sollen. Diese ausgegebenen Funktionswerte werden schließlich zur Steuerung des (übrigen) Automatisierungssystems 1 verwendet.

Für den Fall, dass der Überwachungsbaustein 3 einen Ausnahmefall des Automatisierungssystems 1 erkennt, sendet er, wie erläutert, eine Anforderung an den Sequenzkontrollbaustein 3. Diese hat zum Inhalt, dass die aktuell aktive Phase gestoppt wird und ein sicherer Zustand des Automatisierungssystems 1 bewirkt werden soll. Auch wenn dem Sequenzkontrollbaustein 4 erfüllte Übergangsbedingungen von der ersten Phase auf die zweite Phase von dem Transitionsbaustein 2 gemeldet wurden, wird kein Übergang zu der zweiten Phase bewirkt, da die Anforderung des Überwachungsbausteins 3 eine höhere Priorität / Dringlichkeit aufweist.

Der Sequenzkontrollbaustein 4 gibt entsprechend dem digitalen Phasenfunktionsbaustein 5 und dem analogen Phasenfunktionsbaustein 6 entsprechende Befehle, die für die Einleitung des sicheren Zustands notwendigen Funktionswerte über die Signalleitungen 10a, 10b, 10c, 11a, 11b, 11c an die Prozessanlage 7 auszugeben. Die notwendigen Informationen über die hierfür benötigten Funktionswerte können in den Phasenfunktionsbausteinen 5, 6 hinterlegt sein. Es ist aber genauso möglich, dass der Sequenzkontrollbaustein 4 über diese Informationen verfügt.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Automatisierungssystem (1) zur Automatisierung einer Sequenz, wobei die Sequenz eine Mehrzahl an Phasen umfasst, innerhalb derer eine bestimmte Funktion zur Steuerung einer technischen Anlage (7) ausführbar ist, **dadurch gekennzeichnet, dass**
das Automatisierungssystem (1) wenigstens einen fehlersicheren Transitionsbaustein (2, 2a, 2b, 2c), einen fehlersicheren Überwachungsbaustein (3, 3a, 3b, 3c), einen fehlersicheren Sequenzkontrollbaustein (4) und einen fehlersicheren Phasenfunktionsbaustein (5, 5a, 5b, 5c, 6, 6a, 6b, 6c) aufweist,
wobei der fehlersichere Transitionsbaustein (2, 2a, 2b, 2c) dazu ausgebildet und vorgesehen ist, für eine erste Phase der Automatisierung dahingehend eine Überprüfung vorzunehmen, ob Übergangsbedingungen für einen Übergang von der ersten Phase in eine zweite Phase erfüllt sind, und eine korrespondierende Information an den Sequenzkontrollbaustein (4) zu übermitteln,
und wobei der fehlersichere Überwachungsbaustein (3, 3a, 3b, 3c) dazu ausgebildet und vorgesehen ist, das Vorliegen eines sicheren Zustands des Automatisierungssystems (1) während der ersten Phase zu überprüfen und eine korrespondierende Information an den Sequenzkontrollbaustein (4) zu übermitteln,
wobei der fehlersichere Sequenzkontrollbaustein (4) dazu ausgebildet und vorgesehen ist, eine aktuell aktive Phase der Automatisierung anhand der von dem Transitionsbaustein (2, 2a, 2b, 2c) und dem Überwachungsbaustein (3, 3a, 3b, 3c) übermittelten Informationen zu ermitteln und eine Information bezüglich der aktuell aktiven Phase an den Phasenfunktionsbaustein (5, 5a, 5b, 5c, 6, 6a, 6b, 6c) weiterzugeben,
und wobei der fehlersichere Phasenfunktionsbaustein (5, 5a, 5b, 5c, 6, 6a, 6b, 6c) dazu ausgebildet und vorgesehen ist, einen zu der aktuell aktiven Phase gehörigen Funktionswert auszugeben, wobei der Funktionswert zur Steuerung des Automatisierungssystems (1) verwendbar ist.

2. Automatisierungssystem (1) nach Anspruch 1, das einen ersten Phasenfunktionsbaustein (5, 5a, 5b, 5c) zur Ausgabe von digitalen Funktionswerten und einen zweiten Phasenfunktionsbaustein (6, 6a, 6b, 6c) zur Ausgabe von analogen Funktionswerten aufweist.

3. Automatisierungssystem (1) nach Anspruch 1 oder 2, bei dem der Sequenzkontrollbaustein (4) dazu ausgebildet und vorgesehen ist, für den Fall, dass er von dem Überwachungsbaustein (3, 3a, 3b, 3c) die Information erhält, dass kein sicherer Zustand des Automatisierungssystems (1) vorliegt, einen sicheren Zustand des Automatisierungssystems (1) zu bewirken.

4. Automatisierungssystem (1) nach einem der vorangegangenen Ansprüche, bei dem der Transitionsbaustein (2, 2a, 2b, 2c) und/oder der Überwachungsbaustein (3, 3a, 3b, 3c) eine Mehrzahl an Instanzen aufweist, die jeweils einer bestimmten Phase zugeordnet sind.

5. Automatisierungssystem (1) nach einem der vorangegangenen Ansprüche, bei dem der Phasenfunktionsbaustein (5, 6) eine Mehrzahl an Instanzen (5a, 5b, 5c, 6a, 6b, 6c) aufweist, die jeweils einer bestimmten Phase zugeordnet und zur Ausgabe eines bestimmten Funktionswerts ausgebildet sind.

6. Verfahren zur fehlersicheren Durchführung einer Sequenz einer Automatisierung eines Automatisierungssystems (1), wobei die Sequenz eine Mehrzahl an Phasen umfasst, innerhalb derer eine bestimmte Funktion zur Steuerung einer technischen Anlage (7) ausführbar ist,
und wobei das Automatisierungssystem (1) wenigstens einen fehlersicheren Transitionsbaustein (2, 2a, 2b, 2c), einen fehlersicheren Überwachungsbaustein (3, 3a, 3b, 3c), einen fehlersicheren Sequenzkontrollbaustein (4) und einen fehlersicheren Phasenfunktionsbaustein (5, 5a, 5b, 5c, 6, 6a, 6b, 6c) aufweist, das Verfahren umfassend:
a) Überprüfung mittels des fehlersicheren Transitionsbausteins (2, 2a, 2b, 2c), ob für eine erste Phase der Automatisierung Übergangsbedingungen für einen Übergang von der ersten Phase in eine zweite Phase erfüllt sind, und Übermittlung von korrespondierenden Informationen an den Sequenzkontrollbaustein (4),
b) Überprüfung mittels des Überwachungsbausteins (3, 3a, 3b, 3c), ob ein sicherer Zustand der Automatisierung während der ersten Phase der Automatisierung vorliegt, und Übermittlung einer korrespondierenden Information an den Sequenzkontrollbaustein (4),
c) Ermittlung einer aktuell aktiven Phase der Automatisierung durch den Sequenzkontrollbaustein (4) anhand der von dem Transitionsbaustein (2, 2a, 2b, 2c) und dem Überwachungsbaustein (3, 3a, 3b, 3c) übermittelten Informationen und Weitergabe einer Information bezüglich der aktuell aktiven Phase an den Phasenfunktionsbaustein (5, 5a, 5b, 5c, 6, 6a, 6b, 6c),
d) Ausgabe eines zu der aktuell aktiven Phase gehörigen Funktionswerts durch den Phasenfunktionsbaustein (5, 5a, 5b, 5c, 6, 6a, 6b, 6c), wobei der Funktionswert zur Steuerung des Automatisierungssystems (1) verwendbar ist und/oder verwendet wird.

7. Computerprogramm mit durch einen Computer ausführbaren Programmcodeanweisungen zur Implementierung des Verfahrens gemäß Anspruch 6.

8. Speichermedium mit einem durch einen Computer ausführbaren Computerprogramm gemäß Anspruch 7.

9. Computersystem, auf dem ein Computerprogramm nach Anspruch 7 implementiert ist.
